# EUROPEAN PATENT APPLICATION

(11) **EP 1 721 953 A1**
(43) Date of publication of application: **15.11.2006**
(21) Application number: 05720108.9
(22) Date of filing: 01.03.2005
(51) Int. Cl.: C10G 35/095, B01J 29/40, B01J 29/87

(54) **PROCESS FOR PRODUCTION OF HIGH-OCTANE BASE GASOLINE**

(30) Priority: 02.03.2004 JP 2004057820; 02.11.2004 JP 2004319605
(71) Applicant: Nippon Oil Corporation, Tokyo 105-8412 (JP)
(72) Inventor: WAKU, Toshio c/o Nippon Oil Corporation, Yokohama-shi, Kanagawa 2310815 (JP); TANAKA, Yuichi c/o Nippon Oil Corporation, Yokohama-shi, Kanagawa 2310815 (JP); HAYASAKA, Kazuaki c/o Nippon Oil Corporation, Yokohama-shi, Kanagawa 2310815 (JP); KONNO, Hirofumi c/o Nippon Oil Corporation, Yokohama-shi, Kanagawa 2310815 (JP)
(74) Representative: Bradley, Josephine Mary
(86) International application number: PCT/JP2005/003836
(87) International publication number: WO 2005/083040

(57) **Abstract**

A process for producing a high-octane gasoline blending stock in high yield from hydrocarbons having 4 carbon atoms and/or hydrocarbons having 5 carbon atoms recovered as by-products from a catalytic cracking unit or a thermal cracking unit, **characterized in that** a hydrocarbon mixture containing 50 percent by weight or more of hydrocarbon having 4 carbon atoms and/or hydrocarbons having 5 carbon atoms is brought into contact with a zeolite catalyst so as to be reformed under such reaction conditions that the reformed fraction having 5 or more carbon atoms has:
(1) a content of olefins having 5 or more carbon atoms of 5 to 90 percent by weight;
(2) an aromatic content of 10 to 90 percent by weight;
(3) a benzene content of the aromatics of 10 percent by mass or less; and
(4) a content of aromatics having 8 carbon atoms of the aromatics of 30 percent by mass, and the reformed fraction having 5 or more carbon atoms has a research octane number of 95 or higher and is produced at a yield of 60 percent by mass or more based on the hydrocarbon mixture.

## Description

### [Field of the Invention]

The present invention relates to a process for producing a high-octane gasoline blending stock in high yields from paraffins and/or olefins each having 4 and/or 5 carbon atoms recovered as by-products from a catalytic cracking unit or a thermal cracking unit, over a long period of time in a stable manner.

### [Background of the Invention]

Conventionally, the catalytic reforming of straight run naphthas with a platinum/alumina catalyst has been widely commercially employed for the production of a high octane gasoline. The feedstock naphthas used in the catalytic reforming are fractions having boiling points of from 70 to 180°C when intended to be used for the production of gasoline for automobiles and fractions having boiling points of from 60 to 150°C when intended to be used for the production of aromatic fractions such as xylene, so-called BTX. However, it is difficult to produce a high-octane gasoline from light hydrocarbons mainly containing hydrocarbon components having fewer than 6 carbon atoms (paraffins and/or olefins) because the resulting products would be decreased in octane number due to the lower conversion rate to the aromatic fractions caused by the fewer carbon atoms. Therefore, under the current circumstances, such light hydrocarbons are used in very limited ranges such as raw materials for the production petrochemical products and city gases.

The recent demands on petroleum have been rapidly shifted toward clean oils, and the proportion of the secondary cracking units in the total refining units has been increased. It is expected that such trend will be enhanced for some time in the future. In this connection, the proportion of the light hydrocarbons in the final products per unit volume of crude oil is expected to be increased more than ever. Under these situations, hydrocarbons having 3 carbon atoms such as propylene or the like are predicted to be balanced in supply and demand because they are vigorously demanded for petrochemical uses. On the other hand, the hydrocarbons having 4 or 5 carbon atoms (paraffins and/or olefins) will tends to be increasingly left over more than ever correlatively with the tightened regulations concerning the vapor pressure of gasoline.

With this background in view, much attention has been paid to the production of a high-octane gasoline from light hydrocarbons, such as those having 4 or 5 carbon atoms in particular (paraffins and/or olefins) as means for increasing the added value of the light hydrocarbons and solving the lack of high-octane gasoline blending stocks. The amount of benzene in the final gasoline product is desirously less because benzene contained therein could cause environmental pollution if it leaks upon handling or remains as an unburned component. Furthermore, with a view to the current demand trend, this final product, if containing quantities of aromatics having 8 carbon atoms (C8), which are not only high in octane number but also important as raw materials for the production of petrochemical products, will be economically efficient in a broad sense because the product has a flexibility that allows it to be used not only as a gasoline fraction but also as raw materials for chemical products.

As techniques relating to the production of a high-octane gasoline blending stock are known various processes which involve the contact with a crystalline silicate, particularly a crystalline aluminosilicate and a metallosilicate, of the MFI-type structure. For example, Patent Document 1 below specifically discloses a process which comprises converting each of n-butane and propane to aromatic compounds using a calcined product of a crystalline gallium silicate with the composition represented by the following formula:

2Na₂O:9(C₃H₇)₄NOH:0.33Ga₂O₃:25SiO₂:450H₂O

as a catalyst after being ammonium-exchanged and calcined. Patent Document 2 below discloses a process for producing a high-octane gasoline blending stock, which comprises contacting a light hydrocarbon having 2 to 7 carbon atoms with a crystalline aluminogallosilicate with its framework comprised of SiO₄, AlO₄, and GaO₄ tetrahedera at a temperature of 350 to 650°C under a hydrogen partial pressure of not higher than 490 kPa (5 kg/cm²). These conventional processes, however, are not yet satisfactory from the industrial point of view because the yield of the high-octane gasoline from light hydrocarbons is low, the resulting gasoline component contains a large amount of benzene but is less in the proportion of the content of the C8 aromatics that are high in octane number and useful as petrochemical materials among the aromatics, and the catalyst deactivates in a short period of time and thus needs to be regenerated with air every several days.
(1) Patent Document 1: Japanese Patent Laid-Open Publication No. 59-98020
(2) Patent Document 2: Japanese Patent Laid-Open Publication No. 62-254847

### [Disclosure of the Invention]

The present invention has an object to provide a process for producing a high-octane gasoline blending stock from a light hydrocarbon feedstock, which process provides high yields of gasoline which is though high in octane number, low in benzene concentration, and high in C8 aromatic fraction concentration and also provides an extremely stable and long catalyst life, compared with the conventional processes.

As a result of extensive studies conducted for solving the foregoing problems, the present invention was achieved on the basis of the finding that a fraction containing mainly hydrocarbons having 4 carbon atoms and/or those having 5 carbon atoms was brought into contact with a zeolite catalyst under appropriate conditions, resulting in high yields of a high-octane and low-benzene gasoline fraction with high yields of C8 aromatics which are high in octane number and important as petrochemical materials, in a stable manner for a long period of time.

That is, the present invention relates to a process for producing a high-octane gasoline blending stock wherein a hydrocarbon mixture containing 50 percent by weight or more of hydrocarbons having 4 carbon atoms and/or hydrocarbons having 5 carbon atoms is brought into contact with a zeolite catalyst so as to be reformed under such reaction conditions that the reformed fraction having 5 or more carbon atoms has:
(1) a content of olefins having 5 or more carbon atoms of 5 to 90 percent by weight;
(2) an aromatic content of 10 to 90 percent by weight;
(3) a benzene content of the aromatics of 10 percent by mass or less; and
(4) a content of aromatics having 8 carbon atoms of the aromatics of 30 percent by mass or more, and the reformed fraction having 5 or more carbon atoms has a research octane number of 95 or higher and is produced at a yield of 60 percent by mass or more based on the hydrocarbon mixture.

The present invention will be described in more detail below.

Hydrocarbon mixtures used as feedstock in the present invention are those containing 50 percent by mass or more, preferably 70 percent by mass or more, and more preferably 90 percent by mass or more of hydrocarbons having 4 carbon atoms and/or hydrocarbons having 5 carbon atoms. A hydrocarbon mixture containing less than 50 percent by mass of hydrocarbons having 4 carbon atoms and/or hydrocarbons having 5 carbon atoms is not preferable because high-octane aromatic fractions such as C8 aromatics are less produced and thus the resulting gasoline fraction will be lower in octane number. Preferably, feedstock hydrocarbon mixtures used herein contain 90 percent by mass or more of hydrocarbons having 2 to 7, preferably 3 to 6 carbon atoms. If the content of such hydrocarbons is less than 90 percent by mass, the yield of the gasoline fraction having 5 or more carbon atoms would be decreased. Furthermore, the feedstock hydrocarbon mixtures contain paraffins in a total amount of preferably 70 percent by mass or less and more preferably 60 percent by mass or less. If the total amount of paraffins is in excess of 70 percent by mass, the yield of the gasoline fraction having 5 or more carbon atoms in the reaction product would be decreased due to the low reactivity.

Such feedstock hydrocarbon mixtures may be recovered from, for example, a catalytic cracking unit or a thermal cracking unit. The reforming technique according to the present invention intends to produce a high-octane gasoline blending stock wherein polyolefins and aromatics in particular coexist, through a series of reactions for producing aromatics via dehydrogenation and polymerization. Because the feedstock containing large amounts of substances having 4 carbon atoms and substances having 5 carbon atoms is used in this reforming reaction, olefins having 8 to 10 carbon atoms are produced via polymerization of the feedstock, aromatics having 8 to 10 carbon atoms are produced by converting the olefins by dehydrocyclization, and the dealkylation and transalkylation of the aromatics occur at the same time thereby enabling the reaction product to contain less benzene but more C8 aromatics.

The zeolite catalyst for a reforming reaction used in the present invention is composed of zeolite and a binding agent (binder). The binder is a substance increasing the mechanical properties (strength, anti-wear properties, and moldability) of the catalyst and may be an inorganic oxide such as alumina, silica, alumina-boria, and silica-alumina. The binder is added to be present in an amount of 10 to 70 percent by mass of the catalyst. Alternatively, phosphorus is preferably added to these inorganic binders in order to increase the mechanical strength of the resulting molded product.

Preferably, zeolite that is a major active component of the catalyst used in the present invention is a medium pore size zeolite of the MFI structure wherein the aromatic hydrocarbons in the product can relatively freely move in and out the pores. Specific examples of the MFI-type zeolite include crystalline ZSM-5 or ZSM-5 type metallosilicates.

Synthesis of ZSM-5 zeolite is described in U.S. Patent Nos. 3, 702, 886 and 3, 756, 942. Such crystalline MFI-type ZSM-5 zeolites have the framework composed of silica and alumina in a ratio of 50 to 400 and more preferably 60 to 300. If the ratio of silica to alumina is less than 50, the zeolite will contain more acid, resulting in a decrease in the liquid yield and an acceleration in the catalyst aging. If the ratio of silica to alumina is in excess of 400, the zeolite will contain less acid, resulting in a gasoline product with a lower octane number.

The ZSM-5-type metallosilicate may be prepared by complying with the synthesis method of ZSM-5 and adding a nitrate or a sulfate that is the skeletal constituting element as the raw material.

Desirously, the zeolite of the MFI-structure contains one or more metals selected from the group consisting of gallium, zinc, iron, platinum, boron, vanadium, nickel, and cobalt. Preferably, the zeolite contains gallium and/or zinc. Each of the metals is desirously contained in an amount of 0.1 to 10.0 percent by weight of the zeolite. The metals may be contained in the zeolite by any of the conventional methods, such as the ion exchange, impregnation, and incipient wetness methods. Preferably, the metals is contained in the zeolite framework structure. Particularly preferable zeolites include crystalline aluminogallosilicates containing in their skeletal structure 0.1 to 5.0 percent by weight of aluminum and 0.1 to 10.0 percent by weight of gallium, crystalline aluminozincosilicates containing in their skeletal structure 0.1 to 5.0 percent by weight of aluminum and 0.1 to 10.0 percent by weight of zinc, and mixtures thereof.

The process for producing a high-octane gasoline blending stock according to the present invention is characterized in that a hydrocarbon mixture containing 50 percent by weight or more of hydrocarbons having 4 carbon atoms and/or hydrocarbons having 5 carbon atoms is brought into contact with a zeolite catalyst so as to be reformed under such reaction conditions that the reformed fraction having 5 or more carbon atoms has:
(1) a content of olefins having 5 or more carbon atoms of 5 to 90 percent by weight;
(2) an aromatic content of 10 to 90 percent by weight;
(3) a benzene content in the aromatics of 10 percent by mass or less; and
(4) a content of aromatics having 8 carbon atoms of the aromatics of 30 percent by mass or more,
   and the reformed fraction having 5 or more carbon atoms has a research octane number of 95 or higher and is produced at a yield of 60 percent by mass or more based on the hydrocarbon mixture.

Reforming of the hydrocarbon mixture under such reaction conditions that the reformed fraction having 5 or more carbon atoms will have the aforesaid properties of (1) to (4) enables to produce a gasoline blending stock containing the aromatics with a low benzene content of 10 percent by weight or less and a high C8 aromatic content of 30 percent by weight or more of the aromatics and having a research octane number of 95 or higher, at a yield of 60 percent by weight or more which was not able to be achieved by the conventional processes.

The olefin content of the reformed fraction having 5 or more carbon atoms needs to be 5 to 90 percent by weight so as to maintain the research octane number at a high level. The aromatic compound content of the fraction needs to be 10 to 90 percent by weight and preferably 20 to 80 percent by weight so as to maintain the yields of the gasoline fraction having 5 or more carbon atoms high at a high level.

In the present invention, a high-octane gasoline blending stock may be produced through the following reactions.

When a feedstock hydrocarbon mixture (reactant) passes through a catalyst bed for a start, the dehydrogenation of the saturated hydrocarbons predominantly occurs. Thereafter, the polymerization of the unsaturated hydrocarbon occurs followed by the formation of olefins having a wide carbon number distribution by the sequential decomposition of the heavy components and then followed by the dehydrocyclization to aromatic hydrocarbons. If the reaction temperature is too low, the conversion rate of the feedstock hydrocarbon mixture is decreased as an energy sufficient to break the C-H bonds thereof can not be attained, resulting in a decrease in the yield of the reformed gasoline and in a decrease in the octane number thereof because of no aromatic contained in the reaction product. If the reaction temperature is too high, the gasoline fraction in the reaction product is composed of almost only aromatics, but large amounts of unnecessary light components such as ethane and methane are formed by dealkylation and overcracking and decrease the yield of the gasoline fraction.

Dehydrocylization is an endothermic reaction and thus generally more advantageous for the formation of high-octane aromatics as the temperature rises than for the formation of non-aromatics. However, because hydrocarbons having more carbon atoms are dehydrocyclized to aromatics more rapidly (for example, see Proceedings of fifth world petroleum congress, section III, Paper 4 (1959), H. G. Krane), lowering the temperature as low as possible within a temperature range with less thermodynamic restriction can decrease the amount of aromatics having fewer carbon atoms, such as benzene which has a relatively lower octane number among the aromatics. Furthermore, when the temperature is high, the aromatics having more carbon atoms, i.e., 8 or more carbon atoms undergo dealkylatation, particularly demethylation and thus are undesirably converted to aromatics with fewer methyl substituents to the aromatic rings and relatively low octane number, such as benzene or the like.

In order to produce high yields of a gasoline blending stock with a high octane number, it is, therefore, extremely important to select such reaction conditions within the reaction temperature range wherein aromatics are formed that the liquid yield is inhibited from being decreased by the overcracking of hydrocarbons and the C8 aromatic fraction is inhibited from being decreased with the progress of the dealkylation of the aromatic hydrocarbons.

In the present invention, the reaction temperature at which the feedstock hydrocarbon mixture is converted is in the range of preferably 250 to 500°C, more preferably 300 to 500°C, and further more preferably 350 to 500°C. If the reaction temperature is lower than 250°C, the octane number of the formed gasoline fraction would be lowered because the percentage of the aromatics is decreased. If the reaction temperature is higher than 500°C, the yield of the gasoline fractions having 5 or more carbon atoms would be decreased.

No higher pressures are particularly required for the present invention because a high yield of a high-octane gasoline blending stock can be attained even under ambient pressures. As the dehydrogenation of the feedstock hydrocarbon proceeds, the hydrogen partial pressures balancing the reaction can be attained under the reaction conditions without adding hydrogen. An intentional addition of hydrogen may be advantageous in that the coke accumulation can be prevented and the number of catalyst regeneration can be decreased, but it is not necessarily advantageous because an increase in the partial hydrogen pressure may decrease the yield of a high-octane gasoline. Therefore, it is preferable to control the hydrogen partial pressures to 1 MPa or lower.

A light gas containing methane and/or ethane as main constituent recovered from the reaction product is preferably used because it can prevent the accumulation of coke on the catalyst and the high yields of the aromatic hydrocarbons can be maintained for a long period of time when it is re-circulated through the reaction together with a fresh feedstock hydrocarbon.

The reaction mode to be carried out for the reforming reaction of a light hydrocarbon according to the present invention may be any of a fixed bed, a moving bed, and a fluidized bed. For a fixed bed mode, the reactant is fed at a GHSV (gas hourly space velocity) of 10 to 10,000h⁻¹, preferably 50 to 5,000h-¹, and more preferably 100 to 2,000h⁻¹. If the reactant is fed at a GHSV of less than 10h⁻¹, the yield of the gasoline fractions having 5 or more carbon atoms is decreased. If the reactant is fed at a GHSV of greater than 10,000h⁻¹, the octane number of the formed gasoline fraction would be decreased due to the decreased percentage of the aromatics. If the reaction mode other than the fixed bed is used, the contact time may be determined so as to be the same as with the fixed bed.

The gasoline fraction having 5 or more carbon atoms thus produced has a high research octane number and is not different in characteristics from commercially available gasolines. Therefore, the gasoline fraction may be directly blended as a gasoline blending stock for a high-octane gasoline without decreasing the octane number thereof. When the process of the present invention is introduced, for example, in the downstream of a catalytic cracking unit, the gasoline fraction obtained through the process can enhance the octane number of the gasoline fraction obtained from the unit and maintain the amount of benzene in a blend of these fractions one percent by weight or less. Furthermore, the C4 fractions and/or C5 fractions produced from a catalytic cracking unit can be converted to gasoline fraction with higher boiling points by the process of the present invention and thus can decrease the vapor pressure of the final gasoline product.

### [Best Mode for Carrying out the Invention]

Hereinafter, the present invention will be described in more details by way of the following examples and comparative examples, which should not be construed as limiting the scope of the invention.

### [Preparation of zeolites 1 to 4]

Aluminosilicates (ZSM-5) were prepared by the following procedures.

A solution was prepared by dissolving 117 g of sodium silicate in 221 g of water. Four types of solutions were prepared by dissolving aluminum sulfate the quantity of which was adjusted such that the intended silica-alumina ratio was achieved (13.5 g, 5.9g, 1.8 g, and 1.2 g), 22 g of tetrapropylammonium bromide, 15 g of sulfuric acid, 66 g of sodium chloride in 302 g of water. The solution was gradually mixed with each of the four solutions at room temperature and stirred with a mixer for 5 minutes. Thereafter, the mixture was placed in a 1 L titanium beaker. The beaker was mounted in an autoclave and stirred at a temperature of 180°c and a rotation speed of 100 rpm, under autogenous pressure for 48 hours. After keeping the beaker standing cool, the reaction mixture was filtered out, washed 5 times with 100 ml of water, and filtered. The filtered solid product was dried at a temperature of 120°C and calcined at a temperature of 550°C for 3 hours, under air circulation. The resulting powdered products were confirmed to be of the MFI structure by X-ray diffraction. It was found through a chemical analysis that the powdered products had a SiO₂/Al₂O₃ ratio (molar ratio expressed in terms of oxide) of 40, 90, 300, and 450, respectively.

### [Preparation of zeolite 5]

An aluminogallosilicate containing aluminum and gallium in its framework was prepared by the following procedures.

A solution was prepared by dissolving 1706 g of sodium silicate in 2227 g of water. Another solution was prepared by dissolving 64 g of aluminum sulfate, 36 g of gallium nitrate, 368 g of tetrapropylammonium bromide, 153 g of sulfuric acid, and 653 g of sodium chloride in 2980 g of water. These solutions were gradually mixed, stirring, and the mixture was stirred with a mixer thereby forming the mixed solution into a homogeneous milky liquid. The solution was placed in a stainless autoclave and crystallized by stirring at a temperature of 180°C and a rotation speed of 100 rpm, under autogenous pressure for 72 hours. The crystallized product was filtered out and washed, and the solid product was dried and calcined at a temperature of 550°C for 3 hours. The resulting calcined product was confirmed by X-ray diffraction to be of the ZSM-5 type structure. The chemical analysis of the resulting calcined product revealed that it had molar ratios of SiO₂/Al₂O₃, SiO₂/Ga₂O₃, and SiO₂/(Al₂O₃+Ga₂O₃) expressed in terms of oxide, of 70, 157, and 48, respectively. It was also confirmed by X-ray diffraction that the zeolite had the MFI-type structure.

### [Preparation of catalysts 1 to 4]

Each of the crystalline aluminosilicates obtained in the above preparation of zeolites 1 to 4 was blended with alumina powder added as a binder and water. The mixture was kneaded and then extruded to be about 1.5 mm in diameter. The extrudate was dried and then calcined at a temperature of 600°C for 3 hours. The alumina powder was added to be 27 percent by weight based on the calcined product. The extrudate was ion-exchanged at a temperature of 100°C for 2 hours by adding about 2N ammonium nitrate aqueous solution at the rate of 5 mL/g of the extrudate. After this operation was repeated 4 times, the extrudate was dried to be of the NH₄⁺ type. The extrudate was further calcined at a temperature of 550°C for 3 hours, under air circulation thereby obtaining crystalline aluminosilicate catalysts (catalysts 1 to 4).

### [Preparation of catalyst 5]

The procedures for preparation of catalysts 1 to 4 was followed except that the crystalline aluminogallosilicate obtained in preparation of zeolite 5 was used instead of the crystalline aluminosilicates thereby obtaining a crystalline aluminogallosilicate catalyst (catalyst 5).

### [Examples 1 to 4 and Comparative Examples 1 to 3]

Using catalysts 2 and 5 and hydrocarbon mixtures set forth in Table 1 below diluted with the equimolar amount of nitrogen as feedstock, a conversion reaction was conducted in the absence of hydrogen in a flow-type reactor. The reaction was conducted by adjusting the reactor to a predetermined reaction temperature and introducing reactants at a pressure of one atm. The reaction conditions and results are set forth in Table 1 below.

### [Examples 5 to 8 and Comparative Examples 4 and 5]

Using catalysts 1 to 4 and hydrocarbon mixtures set forth in Table 2 below as feedstock, a conversion reaction was conducted in the absence of hydrogen in a flow-type reactor. Prior to the reaction, nitrogen was charged in the reactor to increase the temperature to a predetermined temperature. Thereafter, the charge of the nitrogen was switched to that of the reactant at a pressure of one atm. In order to observe the deterioration of the catalysts, the states of thereof was analyzed and compared after the lapse of 2.5 hours and 20 hours from the initiation of the reaction. The reaction conditions and results are set forth in Table 2 below.

**Table 1**

| | | Example 1 | Example 2 | Example 3 | Example 4 | Comparative Example 1 | Comparative Example 2 | Comparative Example 3 |
|---|---|---|---|---|---|---|---|---|
| Catalyst | | Catalyst 5 | Catalyst 2 | Catalyst 5 | Catalyst 5 | Catalyst 5 | Catalyst 5 | Catalyst 2 |
| Hydrocarbon mixture | | | | | | | | |
| | isobutene (wt %) | 50 | 50 | 50 | 60 | 50 | 50 | 50 |
| | 1-butene (wt %) | 50 | 50 | | | 50 | 50 | 50 |
| | n-butane (wt %) | | | 50 | | | | |
| | propylene (wt %) | | | | 20 | | | |
| | 1-pentene (wt %) | | | | 10 | | | |
| | 1-hexene (wt %) | | | | 10 | | | |
| Reaction conditions GHSV (hr⁻¹) | | 800 | 800 | 400 | 800 | 800 | 800 | 800 |
| | Reaction temperature (°C) | 400 | 400 | 425 | 400 | 235 | 538 | 538 |
| Produced fractions with C5 or more | | | | | | | | |
| | Yield (wt %) | 77.7 | 71.6 | 62.4 | 72.1 | 42.0 | 55.3 | 38.7 |
| | Olefine content (wt %) | 23.1 | 41.4 | 5.5 | 29.5 | 92.3 | 0.4 | 0.6 |
| | Aromatic content (wt %) | 56.8 | 39.3 | 78.6 | 49.3 | 1.5 | 97.5 | 95.7 |
| (Percentage of each component in the aromatics) | | | | | | | | |
| | Benzene (wt %) | 3.4 | 4.9 | 5.1 | 9.5 | 0.0 | 27.1 | 29.0 |
| | Toluene (wt%) | 24.3 | 19.5 | 30.5 | 31.6 | 0.0 | 42.0 | 44.4 |
| | C8 aromatic (wt %) | 43.8 | 40.5 | 40.7 | 34.4 | 68.4 | 17.9 | 15.1 |
| | C9 or more aromatic (wt %) | 28.5 | 35.1 | 24.2 | 24.5 | 31.6 | 13.0 | 11.5 |
| | Research octane number | 106 | 100 | 109 | 102 | 91 | 109 | 108 |

**Table 2**

| | | Example 1 | | Example 2 | | Example 3 | | Example 4 | | Comparative Example 1 | | Comparative Example 2 | |
|---|---|---|---|---|---|---|---|---|---|---|---|---|---|
| Catalyst | | Catalyst 2 | | Catalyst 3 | | Catalyst 2 | | Catalyst 2 | | Catalyst 1 | | Catalyst 4 | |
| silica/alumina ratio | | 90 | | 300 | | 90 | | 90 | | 40 | | 450 | |
| Hydrocarbon mixture | | | | | | | | | | | | | |
| | isobutene (wt %) | 100 | | 100 | | 0 | | 0 | | 100 | | 100 | |
| | 1-pentene (wt %) | 0 | | 0 | | 100 | | 50 | | 0 | | 0 | |
| | n-pentane (wt%) | 0 | | 0 | | 0 | | 50 | | 0 | | 0 | |
| Reaction conditions GHSV (hr⁻¹) | | 800 | | 800 | | 800 | | 400 425 | | 800 | | 800 | |
| | Reaction temperature(°C) | 400 | | 400 | | 400 | | | | 400 | | 400 | |
| Elapsed time (hr) | | 2.5 | 20 | 2.5 | 20 | 2.5 | 20 | 2.5 | 20 | 2.5 | 20 | 2.5 | 20 |
| Produced fractions with C5 or more | | | | | | | | | | | | | |
| | Yield (wt%) | 72 | 71 | 75 | 74 | 74 | 72 | 69 | 67 | 64 | 66 | 76 | 75 |
| | Aromatic content (wt %) | 34 | 33 | 25 | 24 | 36 | 35 | 48 | 45 | 48 | 19 | 19 | 19 |
| | Research octane number | 101 | 100 | 97 | 96 | 102 | 102 | 103 | 101 | 102 | 93 | 92 | 92 |

## Claims

1. A process for producing a high-octane gasoline blending stock wherein a hydrocarbon mixture containing 50 percent by weight or more of hydrocarbons having 4 carbon atoms and/or hydrocarbons having 5 carbon atoms is brought into contact with a zeolite catalyst so as to be reformed under such reaction conditions that the reformed fraction having 5 or more carbon atoms has:
(1) a content of olefins having 5 or more carbon atoms of 5 to 90 percent by weight;
(2) an aromatic content of 10 to 90 percent by weight;
(3) a benzene content of the aromatics of 10 percent by mass or less; and
(4) a content of aromatics having 8 carbon atoms of the aromatics of 30 percent by mass or more, and the reformed fraction having 5 or more carbon atoms has a research octane number of 95 or higher and is produced at a yield of 60 percent by mass or more based on the hydrocarbon mixture.

2. The process according to claim 1 wherein the hydrocarbon mixture contains 90 percent by weight or more of a hydrocarbon having 2 to 7 carbon atoms.

3. The process according to claim 1 or 2 wherein the total paraffin content in the hydrocarbon mixture is 70 percent by weight or less.

4. The process according to any of claims 1 to 3 wherein the reaction is conducted at a temperature in the range of 250 to 500°C.

5. The process according to any of claims 1 to 4 wherein the reaction is conducted at a GHSV in the range of 10 to 10,000.

6. The process according to any of claims 1 to 5 wherein the zeolite is of the MFI structure.

7. The process according to any of claims 1 to 6 wherein the zeolite is composed of silica and alumina, of the MFI structure, in a ratio of 50 to 400.

8. The process according to claim 6 or 7 wherein the zeolite contains one or more metals selected from the group consisting of gallium, zinc, iron, platinum, boron, vanadium, nickel, and cobalt in an amount of 0.1 to 10.0 percent by weight of the zeolite.

9. The process according to any of claims 6 to 8 wherein the zeolite is any of crystalline aluminogallosilicates containing in their skeletal structure 0.1 to 5.0 percent by weight of aluminum and 0.1 to 10.0 percent by weight of gallium, crystalline aluminozincosilicates containing in their skeletal structure 0.1 to 5.0 percent by weight of aluminum and 0.1 to 10.0 percent by weight of zinc, and mixtures thereof.
